# EUROPEAN PATENT APPLICATION

(11) **EP 3 890 162 A1**
(43) Date of publication of application: **06.10.2021**
(21) Application number: 21152363.4
(22) Date of filing: 19.01.2021
(51) Int. Cl.: H02K 1/27, H02K 1/28

(54) **ROTOR FOR IPM MOTOR**

(30) Priority: 30.03.2020 JP 2020060884
(71) Applicant: Nidec Corporation, Kyoto-shi, Kyoto 601-8205 (JP)
(72) Inventor: HONDA, Takeshi, Kyoto, 601-8205 (JP)
(74) Representative: Stöckeler, Ferdinand

(57) **Abstract**

A configuration is obtained in which a rotor magnet can be easily inserted into a magnet insertion hole and shifting of the rotor magnet in the magnet insertion hole can be curbed. A rotor (2) for an IPM motor (1) has multiple disk-shaped rotor core members (24) that are laminated in the thickness direction to form a columnar rotor core (21) through which a magnet insertion hole (23) penetrates in the axial direction, and a rotor magnet (22) that is inserted into the magnet insertion hole (23). At least one of the multiple rotor core members (24) forms a part of the inner edge of the magnet insertion hole (23), and has a protrusion (55) that comes into contact with the rotor magnet (22) inserted in the magnet insertion hole (23), and a deformation allowing portion (60) that allows deformation of the protrusion (55) and is located on the side opposite to the magnet insertion hole (23) with at least one of the protrusions (55) interposed therebetween in plan view of the rotor core member (24) as viewed from the thickness direction.

## Description

### Technical Field

The present invention relates to a rotor for an IPM motor.

### Background Art

An interior permanent magnet motor (IPM motor) having a structure in which a permanent magnet is embedded in a rotor is known. Patent Literature 1 discloses an IPM motor in which magnet insertion holes are located at equal angular intervals in the circumferential direction in a rotor core of a rotor, and a permanent magnet is inserted in the magnet insertion hole.

The permanent magnet is fixed inside the magnet insertion hole by being sandwiched between a leaf spring portion projecting from an inner wall surface in the magnet insertion hole and the inner wall surface of the magnet insertion hole.

### Citation List

### Patent Literature

Patent Literature 1: JP 2015-76956 A

### Summary of Invention

### Technical Problem

In the IPM motor disclosed in Patent Literature 1, when the permanent magnet is inserted into the magnet insertion hole, the permanent magnet receives, from the leaf spring portion, the same reaction force as the pressing force when the permanent magnet is fixed in the magnet insertion hole. For this reason, in the configuration of Patent Literature 1, a large force is required when the rotor magnet, which is the permanent magnet, is inserted into the magnet insertion hole.

Additionally, when the rotor core and the rotor magnet are sealed with resin, the rotor magnet inserted into the magnet insertion hole tends to be displaced due to the flow of the resin.

An object of the present invention is to provide a rotor having a configuration in which a rotor magnet can be easily inserted into a magnet insertion hole and shifting of the rotor magnet in the magnet insertion hole can be curbed.

### Solution to Problem

A rotor for an IPM motor of one embodiment of the present invention has multiple disk-shaped rotor core members that are laminated in the thickness direction to form a columnar rotor core through which a magnet insertion hole penetrates in the axial direction, and a rotor magnet that is inserted into the magnet insertion hole. At least one of the multiple rotor core members forms a part of the inner edge of the magnet insertion hole, and has the contact portion that comes into contact with the rotor magnet inserted in the magnet insertion hole, and a deformation allowing portion that allows deformation of the contact portion and is located on the side opposite to the magnet insertion hole with at least one of the contact portions interposed therebetween in plan view of the rotor core member as viewed from the thickness direction.

### Advantageous Effects of Invention

According to the rotor for an IPM motor of one embodiment of the present invention, a rotor magnet can be easily inserted into a magnet insertion hole and shifting of the rotor magnet in the magnet insertion hole can be curbed.

### Brief Description of Drawings

Fig. 1 is a diagram showing a schematic configuration of a motor of Embodiment 1.
Fig. 2 is a diagram showing a schematic configuration of a rotor core of Embodiment 1.
Fig. 3 is a partially enlarged view of Fig. 2.
Fig. 4 is a diagram schematically showing deformation that occurs in the rotor core when a rotor magnet is inserted into a magnet insertion hole.
Fig. 5 is a diagram showing a schematic configuration of a rotor core of Embodiment 2.
Fig. 6 is a partially enlarged view of Fig. 5.
Fig. 7 is a diagram schematically showing deformation that occurs in the rotor core when a rotor magnet is inserted into a magnet insertion hole.

### Description of Embodiments

Hereinafter, embodiments of the present invention will be described in detail with reference to the drawings. Note that in the drawings, the same or corresponding parts will be denoted by the same reference symbols and description thereof will not be repeated. Additionally, the dimensions of the constituent members in each drawing do not faithfully represent the actual dimensions of the constituent members and the dimensional ratio of each constituent member.

Note that in the following description of a motor 1, a direction parallel to a central axis P of a rotor 2 is referred to as "axial direction", a direction perpendicular to the central axis P is referred to as "radial direction", and a direction along a circular arc centered on the central axis P is referred to as "circumferential direction". Note, however, that the definitions of directions are not intended to limit the direction of the motor 1 when in use.

Additionally, in the following description, expressions such as "fix", "connect" and "attach" (hereinafter, fix or the like) include not only cases where members are directly fixed or the like, but also cases where members are fixed or the like with another member interposed therebetween. That is, in the following description, the expression fix or the like includes the meaning of direct and indirect fixation or the like between members.

### [Embodiment 1]

### (Configuration of Motor)

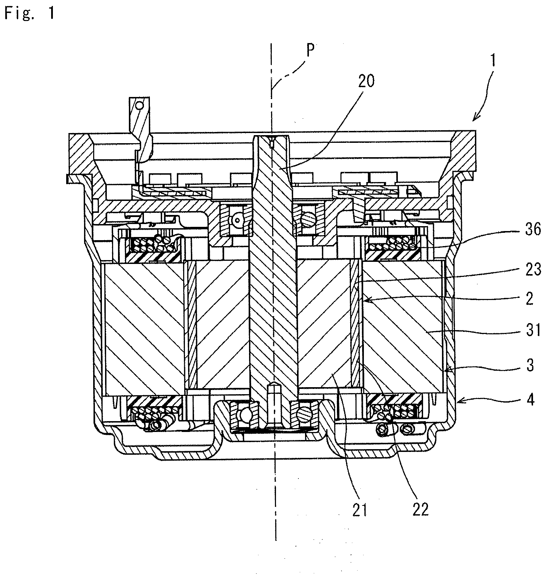

Fig. 1 shows a schematic configuration of a motor 1 which is an IPM motor having a rotor 2 of an embodiment of the present invention. The motor 1 includes a rotor 2, a stator 3, and a housing 4. The rotor 2 is a rotor for an IPM motor in which a magnet is embedded. The rotor 2 rotates about a central axis P with respect to the stator 3. In the present embodiment, the motor 1 is a so-called inner rotor type motor in which the rotor 2 is located so as to be rotatable about the central axis P in the tubular stator 3.

The rotor 2 includes a shaft 20, a rotor core 21, and a rotor magnet 22. The rotor 2 is located radially inward of the stator 3 and is rotatable with respect to the stator 3.

The rotor core 21 has a columnar shape extending along the central axis P. The shaft 20 extending along the central axis P is fixed to and penetrates the rotor core 21 in the axial direction. As a result, the rotor core 21 rotates together with the shaft 20.

The rotor core 21 is formed by laminating multiple disk-shaped rotor core members 24 in the thickness direction. The multiple rotor core members 24 are made of magnetic steel sheets.

The rotor core 21 has a magnet insertion hole 23 that penetrates multiple laminated rotor core members 24 in the axial direction. The magnet insertion hole 23 has a rectangular shape when the rotor core 21 is viewed from the axial direction.

The rotor magnet 22 has a prismatic shape and is rectangular when viewed in the axial direction of the rotor 2. That is, the rotor magnet 22 has a rectangular shape having a long side and a short side in plan view of the rotor core member 24. The axial length of the rotor magnet 22 is equivalent to the axial length of the rotor core 21.

Although not particularly shown, the rotor core 21 and the rotor magnet 22 are sealed with resin while the rotor magnet 22 is accommodated in the magnet insertion hole 23. As a result, the rotor magnet 22 is fixed to the rotor core 21. Note that the rotor core 21 and the rotor magnet 22 do not have to be sealed with resin.

In the following, for the sake of explanation, when the rotor magnet 22 is viewed in the axial direction of the rotor 2, a surface forming the long side of the rotor magnet 22 is referred to as a long side lateral face of the rotor magnet 22, and a surface forming the short side of the rotor magnet 22 is referred to as a short side lateral face of the rotor magnet 22.

The stator 3 is accommodated in the housing 4. In the present embodiment, the stator 3 has a tubular shape. The rotor 2 is located radially inward of the stator 3. That is, the stator 3 is located so as to face the rotor 2 in the radial direction. The rotor 2 is located radially inward of the stator 3 so as to be rotatable about the central axis P.

The stator 3 includes a stator core 31 and a stator coil 36. The stator core 31 has a cylindrical shape extending in the axial direction. The stator coil 36 is wound around the stator core 31.

### (Rotor core member)

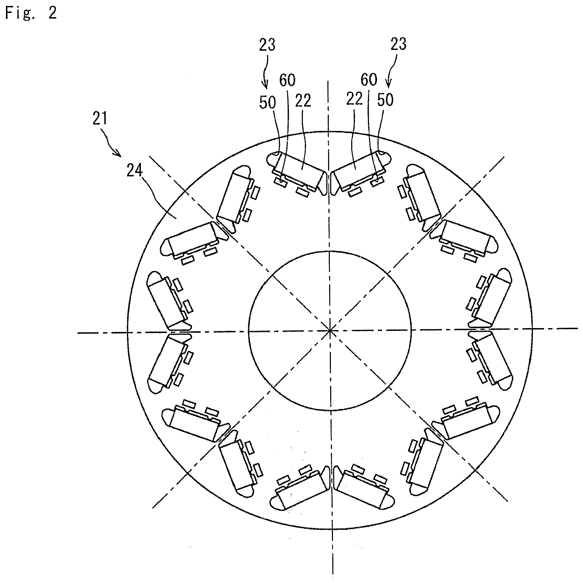

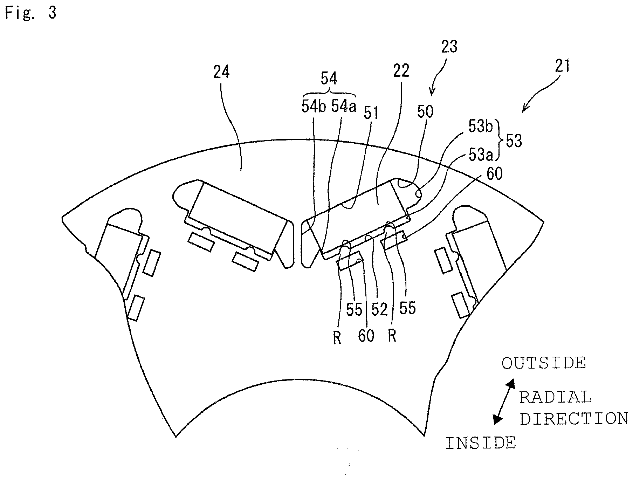

Next, the rotor core member 24 will be described in detail with reference to Figs. 2 and 3. Figs. 2 and 3 are diagrams of the rotor core 21 formed by laminating the rotor core members 24, as viewed from the axial direction. The rotor core member 24 has multiple accommodating holes 50 and multiple deformation allowing portions 60. The shape of the accommodating hole 50 of the rotor core member 24 is the same as the shape of the magnet insertion hole 23 of the rotor core 21 in plan view of the rotor core member 24.

The accommodating hole 50 forms a part of the inner edge of the magnet insertion hole 23 of the rotor core 21. The accommodating hole 50 has a rectangular shape in plan view of the rotor core member 24. In the present embodiment, the longitudinal direction of the accommodating hole 50 is inclined with respect to a radially extending line of the rotor core 21. Examples of the radially extending line are shown by alternate long and short dashed lines in Fig. 2.

In the present embodiment, the rotor core member 24 has 16 accommodating holes 50. Of the 16 accommodating holes 50, eight accommodating holes 50 are circumferentially symmetrical with respect to the other eight accommodating holes 50. The rotor core member 24 has eight pairs of circumferentially symmetric accommodating holes 50 at equal intervals in the circumferential direction.

The rotor magnet 22 is accommodated in each accommodating hole 50. Hence, in a state where the rotor magnet 22 is accommodated in each accommodating hole 50, the rotor magnet 22 is inclined with respect to the radially extending line of the rotor core member 24 when viewed in the axial direction.

As shown in Fig. 3, the inner edge of the accommodating hole 50 includes an outside inner edge portion 51 facing a long side lateral face of the rotor magnet 22 located on the radial outer side, an inside inner edge portion 52 facing a long side lateral face of the rotor magnet 22 located on the radial inner side, an outside connecting inner edge portion 53 facing a short side lateral face of the rotor magnet 22 located on the radial outer side, and an inside connecting inner edge portion 54 facing a short side lateral face of the rotor magnet 22 located on the radial inner side.

The rotor core member 24 has two protrusions 55 that project inward of the accommodating hole 50. With the rotor magnet 22 inserted in the accommodating hole 50, at least one of the two protrusions 55 comes into contact with the long side lateral face of the rotor magnet 22 located on the radial inner side. In the present embodiment, the protrusion 55 functions as a contact portion.

The outside inner edge portion 51 is linear in plan view of the rotor core member 24. With the rotor magnet 22 inserted in the accommodating hole 50, the outside inner edge portion 51 comes into contact with the long side lateral face of the rotor magnet 22 located on the radial outer side.

The outside connecting inner edge portion 53 has a straight portion 53a extending from the inside inner edge portion 52 side toward the outside inner edge portion 51, and a curved portion 53b that curves toward the outside of the accommodating hole 50 from the straight portion 53a.

The inside connecting inner edge portion 54 has a straight portion 54a extending from the inside inner edge portion 52 side toward the outside inner edge portion 51, and a curved portion 54b that curves toward the outside of the accommodating hole 50 from the straight portion 54a.

The straight portion 53a and the straight portion 54a determine the longitudinal position of the rotor magnet 22 with respect to the accommodating hole 50. The two protrusions 55 and the outside inner edge portion 51 determine the lateral position of the rotor magnet 22 with respect to the accommodating hole 50. As a result, the rotor magnet 22 is positioned at a predetermined position in the radial direction and the circumferential direction in the magnet insertion hole 23 of the rotor core 21.

The deformation allowing portion 60 is a through hole that penetrates the rotor core member 24 in the thickness direction. The deformation allowing portion 60 has a rectangular shape in plan view of the rotor core member 24. In the present embodiment, the rotor core member 24 has two deformation allowing portions 60. The two deformation allowing portions 60 are located in the rotor core member 24 on the side opposite to the accommodating hole 50 with the two protrusions 55 interposed therebetween. That is, each deformation allowing portion 60 is located radially inward of each protrusion 55. Note that the number of deformation allowing portions 60 is preferably the same as the number of protrusions 55.

Also note that all the rotor core members 24 forming the rotor core 21 may have the protrusion 55 which is the contact portion and the deformation allowing portion 60. As a result, same-shaped rotor core members 24 can be formed. Hence, the manufacturing cost of the mold for the rotor core member 24 can be reduced, and the work of laminating the rotor core member 24 can be simplified. Accordingly, with the above configuration, the productivity of the rotor 2 can be improved and the production cost thereof can be reduced.

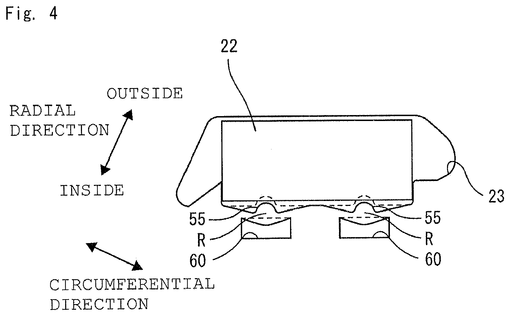

Next, the relationship between the protrusion 55 and the deformation allowing portion 60 will be described with reference to Fig. 4.

The rotor core member 24 has a deformable region R between the protrusion 55 and the deformation allowing portion 60. This region R is deformed on the deformation allowing portion 60 side when the rotor magnet 22 is inserted into the magnet insertion hole 23 of the rotor core 21.

Fig. 4 is a diagram schematically showing the deformation that occurs in the region R when the rotor magnet 22 is inserted into the magnet insertion hole 23. As shown by the solid line in Fig. 4, when the rotor magnet 22 is inserted into the accommodating hole 50 of the rotor core member 24, in plan view of the rotor core member 24, the protrusion 55 and the region R are elastically deformed and move to the deformation allowing portion 60 side. Note that in Fig. 4, for the sake of explanation, the amount of deformation of the region R is exaggerated from the actual amount.

Accordingly, when the rotor magnet 22 is inserted into the magnet insertion hole 23 of the rotor core 21, the protrusion 55 in contact with the rotor magnet 22 can be easily displaced toward the deformation allowing portion 60. Hence, the rotor magnet 22 can be easily inserted into the magnet insertion hole 23. Additionally, the protrusion 55 returns to its original position due to the elastic restoring force of the region R after the rotor magnet 22 is inserted into the magnet insertion hole 23 of the rotor core 21.

Note that in the present embodiment, in plan view of the rotor core member 24, the area of each deformation allowing portion 60 is smaller than the area of the accommodating hole 50. As a result, it is possible to curb deterioration of the magnetic characteristic in the through hole portion as the deformation allowing portion 60 while ensuring the function as the deformation allowing portion 60 that deforms the protrusion 55.

In the present embodiment, the protrusion 55 forms a part of the inner edge of the magnet insertion hole 23 of the rotor core 21, and is a protrusion that projects inward of the magnet insertion hole 23 in plan view of the rotor core member 24. As a result, the rotor magnet 22 can be brought into contact with the protrusion 55 that forms a part of the inner edge of the magnet insertion hole 23 of the rotor core 21. Thus, the rotor magnet 22 can be positioned in the radial direction inside the magnet insertion hole 23.

Additionally, in the present embodiment, the rotor magnet 22 has a rectangular shape having a long side and a short side in plan view of the rotor core member 24. Then, the protrusion 55 comes into contact with the radially inner long side of the rotor magnet 22 in the radial direction of the rotor core member 24, and the deformation allowing portion 60 is located on the side opposite to the radially outer long side of the rotor magnet 22 with the radially inner long side of the rotor magnet 22 interposed therebetween, in the radial direction of the rotor core member 24.

As a result, the protrusion 55 can press the radially outer long side of the rotor magnet 22 against the inner edge of the magnet insertion hole 23 on the radial outer side. Accordingly, the rotor magnet 22 can be positioned in the magnet insertion hole 23 at a position where the rotor 2 generates a larger magnetic field.

As described above, the rotor 2 for the motor 1 which is an IPM motor of the present embodiment has the multiple disk-shaped rotor core members 24 that are laminated in the thickness direction to form the columnar rotor core 21 through which the magnet insertion hole 23 penetrates in the axial direction, and the rotor magnet 22 that is inserted into the magnet insertion hole 23. At least one of the multiple rotor core members 24 forms a part of the inner edge of the magnet insertion hole 23, and has the contact portion that comes into contact with the rotor magnet 22 inserted in the magnet insertion hole 23, and the deformation allowing portion 60 that allows deformation of the contact portion and is located on the side opposite to the magnet insertion hole 23 with at least one of the contact portions interposed therebetween in plan view of the rotor core member 24 as viewed from the thickness direction.

As a result, the rotor magnet 22 can be accommodated in a positioned state in the magnet insertion hole 23 of the columnar rotor core 21 in which multiple rotor core members 24 are laminated in the thickness direction. That is, since the protrusion 55, which is a contact portion, comes into contact with the rotor magnet 22 in the magnet insertion hole 23, the rotor magnet 22 can be positioned at a predetermined position in the magnet insertion hole 23. Hence, even in a case where the rotor core 21 and the rotor magnet 22 are sealed with resin, it is possible to prevent the rotor magnet 22 from moving in the magnet insertion hole 23.

By positioning the rotor magnet 22 in the magnet insertion hole 23 in this way, it is possible to curb the generation of vibration and torque ripple of the motor 1.

Moreover, in each rotor core member 24, in plan view of the rotor core member 24, the deformation allowing portion 60 is located on the side opposite to the magnet insertion hole 23 of the rotor core 21 with the contact portion interposed therebetween. Hence, when the rotor magnet 22 is inserted into the magnet insertion hole 23, the contact portion is easily deformed. Hence, the rotor magnet 22 can be easily inserted into the magnet insertion hole 23.

Additionally, in the present embodiment, the contact portion forms a part of the inner edge of the magnet insertion hole 23 located on the inner side in the radial direction of the rotor core member 24, and the deformation allowing portion 60 is located in the rotor core member 24 on the inner side of the contact portion in the radial direction of the rotor core member 24.

As a result, the contact portion can press the rotor magnet 22 against the inner edge of the magnet insertion hole 23 on the radial outer side. Accordingly, the rotor magnet 22 can be positioned in the magnet insertion hole 23 at a position where the rotor 2 generates a larger magnetic field.

### [Embodiment 2]

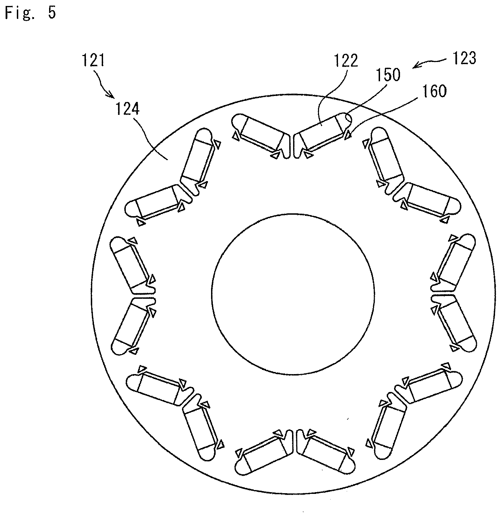

Next, a motor of Embodiment 2 will be described. In the motor of Embodiment 2, the shapes of an accommodating hole 150 and a deformation allowing portion 160 are different from the shapes of the accommodating hole 50 and the deformation allowing portion 60 of Embodiment 1. Fig. 5 is a diagram showing a schematic configuration of a rotor core 121 of Embodiment 2.

The rotor core 121 is formed by laminating multiple disk-shaped rotor core members 124 in the thickness direction. The rotor core 121 has a magnet insertion hole 123 that penetrates multiple laminated rotor core members 124 in the axial direction.

The rotor core member 124 has the accommodating hole 150 and the deformation allowing portion 160. The accommodating hole 150 forms a part of the inner edge of the magnet insertion hole 123 of the rotor core. Note that the shape of the magnet insertion hole 123 of the rotor core 121 is the same as the shape of the accommodating hole 150 described below.

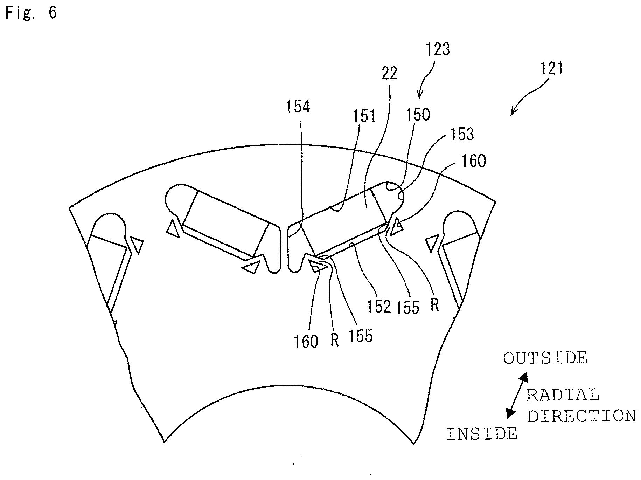

As shown in Fig. 6, the inner edge of the accommodating hole 150 includes an outside inner edge portion 151 facing a long side lateral face of a rotor magnet 22 located on the radial outer side, an inside inner edge portion 152 facing a long side lateral face of the rotor magnet 22 located on the radial inner side, an outside connecting inner edge portion 153 facing a short side lateral face of the rotor magnet 22 located on the radial outer side, an inside connecting inner edge portion 154 facing a short side lateral face of the rotor magnet 22 located on the radial inner side, and two inclined portions 155 connecting both end portions of the inside inner edge portion 152 and the outside connecting inner edge portion 153 and inside connecting inner edge portion 154.

The two inclined portions 155 form parts of the inner edge of the magnet insertion hole 123 of the rotor core 121 located on both sides in the circumferential direction of the rotor core member 124. With the rotor magnet 22 inserted in the accommodating hole 150, the two inclined portions 155 come into contact with the corners at both ends of a long side lateral face of the rotor magnet 22 located on the inner side.

The outside inner edge portion 151 is linear in plan view of the rotor core member 124. With the rotor magnet 22 inserted in the accommodating hole 150, the outside inner edge portion 151 comes into contact with the long side lateral face of the rotor magnet 22 located on the radial outer side.

The outside inner edge portion 151 and the inclined portion 155 determine the lateral position of the rotor magnet 22. The inclined portions 155 determine the longitudinal position of the rotor magnet 22. As a result, the rotor magnet 22 is positioned at a predetermined position in the radial direction and the circumferential direction in the magnet insertion hole 123 of the rotor core 121.

The deformation allowing portion 160 is a through hole that penetrates the rotor core member 124 in the thickness direction. The deformation allowing portion 160 has a triangular shape in plan view of the rotor core member 124. In the present embodiment, the rotor core member 124 has two deformation allowing portions 160. The two deformation allowing portions 160 are located in the rotor core member 124 on the side opposite to the accommodating hole 150 with the two inclined portions 155 interposed therebetween. In plan view of the rotor core member 124, two sides of the deformation allowing portion 160 extend along the long side and the short side of the rotor magnet 22. One side of the deformation allowing portion 160 extends along the inclined portion 155.

The rotor core member 124 has a deformable region R between the inclined portion 155 and the deformation allowing portion 160. This region R is deformed on the deformation allowing portion 160 side when the rotor magnet 22 is inserted into the magnet insertion hole 123 of the rotor core 121.

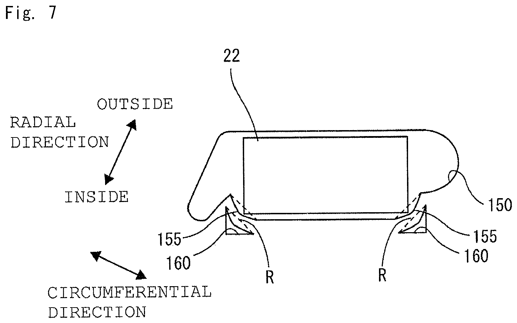

Fig. 7 is a diagram schematically showing the deformation that occurs in the region R when the rotor magnet 22 is inserted into the magnet insertion hole 123. As shown by the solid line in Fig. 7, when the rotor magnet 22 is inserted into the accommodating hole 50 of the rotor core member 124, in plan view of the rotor core member 124, the inclined portion 155 and the region R are elastically deformed and move to the deformation allowing portion 160 side. Note that in Fig. 7, for the sake of explanation, the amount of deformation of the region R is exaggerated from the actual amount.

Accordingly, in the present embodiment, too, as in Embodiment 1, when the rotor magnet 22 is inserted into the magnet insertion hole 123 of the rotor core 121, the deformation allowing portion 160 allows the inclined portion 155 that comes into contact with the rotor magnet 22 to be easily displaced toward the deformation allowing portion 160. Hence, the rotor magnet 22 can be easily inserted into the magnet insertion hole 123.

Additionally, in the present embodiment, too, as in Embodiment 1, after the rotor magnet 22 is inserted into the magnet insertion hole 123 of the rotor core 121, the inclined portion 155 returns to the original position. In the present embodiment, the inclined portion 155 forms a part of the inner edge of the magnet insertion hole 123, and extends in a direction inclined with respect to a side of the rotor magnet 22 in plan view of the rotor core member 124. As a result, a corner of the rotor magnet 22 can be brought into contact with the inclined portion 155 that forms a part of the inner edge of the magnet insertion hole 123 of the rotor core 121. Thus, the rotor magnet 22 can be positioned in the radial direction and the circumferential direction in the magnet insertion hole 123.

Additionally, in the present embodiment, the inclined portions 155 form parts of the inner edge of the magnet insertion hole 123 located on both sides in the circumferential direction. By bringing the corners of the rotor magnet 22 into contact with such inclined portions 155, the rotor magnet 22 can be positioned more accurately in the radial direction and the circumferential direction in the magnet insertion hole 123. Hence, the rotor magnet 22 can be positioned more accurately in the magnet insertion hole 123.

As described above, in the rotor of the present embodiment, too, the rotor magnet 22 can be accommodated in a positioned state in the magnet insertion hole 123 of the columnar rotor core 121 in which multiple rotor core members 124 are laminated in the thickness direction. That is, since the inclined portion 155, which is a contact portion, comes into contact with the rotor magnet 22 in the magnet insertion hole 123, the rotor magnet 22 can be positioned at a predetermined position in the magnet insertion hole 123. Additionally, since the deformation allowing portion 160 is provided, the contact portion is easily deformed when the rotor magnet 22 is inserted into the magnet insertion hole 123. Hence, the rotor magnet 22 can be easily inserted into the magnet insertion hole 123.

Additionally, in the present embodiment, too, the deformation allowing portion 160 is located in the rotor core member 124 on the inner side of the contact portion in the radial direction of to the rotor core member 124. As a result, the contact portion can press the rotor magnet 22 against the inner edge of the magnet insertion hole 123 on the radial outer side. Accordingly, the rotor magnet 22 can be positioned in the magnet insertion hole 123 at a position where the rotor generates a larger magnetic field.

### (Other embodiments)

While embodiments of the present invention have been described above, the above-described embodiments are merely examples for carrying out the present invention. Hence, the embodiment is not limited to the embodiments described above, and the embodiments described above can be appropriately modified and implemented within a range not departing from the gist of the invention.

In the aforementioned Embodiments 1 and 2, the deformation allowing portion 60, 160 is a through hole. However, the deformation allowing portion may be a thin-walled portion. In this case, the deformation allowing portion may have any configuration as long as it elastically deforms when the rotor magnet is inserted into the magnet insertion hole and allows displacement of the protrusion or the inclined portion.

Additionally, the deformation allowing portion, which is a through hole, may be connected to the accommodating hole. In this case, the deformation allowing portion also forms a part of the accommodating hole.

Additionally, the configurations of the aforementioned Embodiments 1 and 2 may be combined. That is, the rotor core member may have a protrusion and an inclined portion. In this case, too, the rotor core member has a deformation allowing portion that allows deformation of the protrusion and the inclined portion.

The 16 accommodating holes 50, 150 included in each rotor core member 24, 124 may all have the same shape, or some of the accommodating holes may have different shapes.

In the aforementioned Embodiments 1 and 2, the longitudinal direction of the accommodating hole 50, 150 extends in a direction inclined with respect to a radially extending line of the rotor core member 24, 124. However, the longitudinal direction of the accommodating hole may extend in a direction orthogonal to the radial direction.

In the aforementioned Embodiments 1 and 2, the deformation allowing portions 60, 160 included in each rotor core member 24, 124 have the same shape and are located at the same positions with respect to the accommodating holes 50, 150. However, the deformation allowing portions may have different shapes. Additionally, some deformation allowing portions may be located at different positions with respect to the accommodating holes 50, 150.

Multiple rotor core members forming the rotor core may have a protrusion and a deformation allowing portion at the same position when viewed from the axial direction, or may have the protrusion and the deformation allowing portion at different positions when viewed from the axial direction. It is also possible to omit the protrusion and the deformation allowing portion from some rotor core members.

The multiple rotor core members forming the rotor core may have an inclined portion and a deformation allowing portion at the same position when viewed from the axial direction, or may have the inclined portion and the deformation allowing portion at different positions when viewed from the axial direction. It is also possible to omit the inclined portion and the deformation allowing portion from some rotor core members.

In the aforementioned Embodiment 1, the rotor core member 24 has the same number of deformation allowing portions 60 as the number of protrusions 55. However, the number of protrusions and the number of deformation allowing portions may be different.

In the aforementioned Embodiment 1, the protrusion 55, which is a contact portion, includes two protrusions. However, the number of protrusions may be one, three or more. From the viewpoint of positioning accuracy of the rotor magnet in the magnet insertion hole, the protrusion preferably includes multiple protrusions. The multiple protrusions allow the rotor magnet to be more reliably pressed against the inner edge of the magnet insertion hole. Hence, the rotor magnet can be more reliably positioned in the magnet insertion hole.

In the aforementioned Embodiment 2, the rotor core member 124 has two inclined portions located on both sides in the circumferential direction of the rotor core member 124. However, it is also possible to provide the rotor core member with only an inclined portion located on the inner side in the circumferential direction of the rotor core member. Note that from the viewpoint of positioning accuracy of the rotor magnet in the magnet insertion hole, the rotor core member preferably has two inclined portions.

In the aforementioned Embodiment 1, the deformation allowing portion 60 has a rectangular shape. In the aforementioned Embodiment 2, the deformation allowing portion 160 has a triangular shape. However, as long as the stator core member is located between the accommodating hole and the deformation allowing portion and has a deformable region, the deformation allowing portion may have a shape other than rectangular or triangular.

In the aforementioned Embodiments 1 and 2, the number of accommodating holes 50, 150 is 16. However, the number of accommodating holes may be less than 15 or 15, and may be more than 17 or 17.

### Industrial Applicability

The present invention can be used for a rotor of an IPM motor.

### Reference Signs List

- 1: motor
- 2: rotor
- 3: stator
- 4: housing
- 20: shaft
- 21, 121: rotor core
- 22: rotor magnet
- 23, 123: magnet insertion hole
- 24, 124: rotor core member
- 31: stator core
- 36: stator coil
- 50, 150: accommodating hole
- 51, 151: outside inner edge portion
- 52, 152: inside inner edge portion
- 53, 153: outside connecting inner edge portion
- 54, 154: inside connecting inner edge portion
- 55: protrusion
- 60, 160: deformation allowing portion
- 155: inclined portion

## Claims

1. A rotor (2) for an IPM motor (1) comprising:
a plurality of disk-shaped rotor core members (24, 124) that are laminated in a thickness direction to form a columnar rotor core (21, 121) through which a magnet insertion hole (23, 123) penetrates in an axial direction; and
a rotor magnet (22) that is inserted into the magnet insertion hole (23, 123), **characterized in that**
at least one of the plurality of rotor core members (24, 124) has
a contact portion that forms a part of an inner edge of the magnet insertion hole (23, 123) and comes into contact with the rotor magnet (22) inserted into the magnet insertion hole (23, 123), and
a deformation allowing portion (60, 160) that allows deformation of the contact portion and is located on a side opposite to the magnet insertion hole (23, 123) with at least one of the contact portions interposed therebetween in plan view of the rotor core member (24, 124) as viewed from the thickness direction.

2. The rotor (2) for an IPM motor (1) according to claim 1, **characterized in that**
the contact portion forms a part of the inner edge of the magnet insertion hole (23, 123) located on an inner side in a radial direction of the rotor core member (24, 124), and
the deformation allowing portion (60, 160) is located in the rotor core member (24, 124) on the inner side of the contact portion in the radial direction.

3. The rotor (2) for an IPM motor (1) according to any one of claims 1 and 2, **characterized in that**
the rotor magnet (22) has a rectangular shape having a long side and a short side in plan view of the rotor core member (24, 124),
the contact portion comes into contact with a radially inner long side of the rotor magnet (22) in the radial direction of the rotor core member (24, 124), and
the deformation allowing portion (60, 160) is located on a side opposite to a radially outer long side of the rotor magnet (22) with the radially inner long side of the rotor magnet (22) interposed therebetween, in the radial direction of the rotor core member (24, 124).

4. The rotor (2) for an IPM motor (1) according to any one of claims 1 and 2, **characterized in that**
the contact portion forms a part of the inner edge of the magnet insertion hole (123), and is an inclined portion (155) extending in a direction inclined with respect to a side of the rotor magnet (22) in plan view of the rotor core member (124).

5. The rotor (2) for an IPM motor (1) according to claim 4, **characterized in that**
the inclined portion (155) forms parts of the inner edge of the magnet insertion hole (123) located on both sides in a circumferential direction of the rotor core member (124).

6. The rotor (2) for an IPM motor (1) according to any one of claims 1 to 3, **characterized in that**
the contact portion forms a part of the inner edge of the magnet insertion hole (23), and is a protrusion (55) that projects inward of the magnet insertion hole (23) in plan view of the rotor core member (24).

7. The rotor (2) for an IPM motor (1) according to claim 6, **characterized in that**
the contact portion includes a plurality of the protrusions (55).

8. The rotor (2) for an IPM motor (1) according to any one of claims 1 to 7, **characterized in that**
the deformation allowing portion (60, 160) is a through hole that penetrates the rotor core member (24, 124) in the thickness direction.

9. The rotor (2) for an IPM motor (1) according to claim 8, **characterized in that**
an area of the through hole is smaller than an area of the magnet insertion hole (23, 123) in plan view of the rotor core member (24, 124).

10. The rotor (2) for an IPM motor (1) according to any one of claims 1 to 9, **characterized in that**
all the rotor core members (24, 124) forming the rotor core (21, 121) have the contact portion and the deformation allowing portion (60, 160).
